# FASCICULE DE BREVET EUROPEEN

(11) **EP 2 486 352 B1**
(45) Date de publication et mention de la délivrance du brevet: **14.05.2014**
(21) Numéro de dépôt: 10777045.5
(22) Date de dépôt: 30.09.2010
(51) Int. Cl.: F27B 7/20, F27B 7/38, C04B 7/47

(54) **PROCEDE DE REFROIDISSEMENT DE MATIERES SOLIDES GRANULEUSES ET INSTALLATION DE CUISSON CONTINUE EN TANT QUE TELLE**
VERFAHREN ZUR KÜHLUNG GRANULARER FESTSTOFFMATERIALIEN UND ANLAGE ZU IHRER KONTINUIERLICHEN HÄRTUNG
METHOD FOR COOLING GRANULAR SOLID MATERIALS, AND CONTINUOUS CURING FACILITY AS SUCH

(30) Priorité: 08.10.2009 FR 0904812
(43) Date de publication de la demande: 15.08.2012
(73) Titulaire: Fives FCB, 59650 Villeneuve d'Ascq (FR)
(72) Inventeur: CORDONNIER, Alain, F-59650 Villeneuve d'Ascq (FR); DEVROE, Sébastien, F-59650 Villeneuve d'Ascq (FR); HUERRE, Yan, F-59650 Villeneuve d'Ascq (FR)
(74) Mandataire: Bureau Duthoit Legros Associés
(86) Numéro de dépôt international: PCT/FR2010/000649
(87) Numéro de publication internationale: WO 2011/042618

(56) Documents cités:
- DE-A1-102006 026 234

## Description

L'invention est relative à un procédé de refroidissement de matières solides granuleuses, issues d'une installation de cuisson continue, ainsi qu'à une installation de cuisson continue en tant que telle.

L'invention trouvera une application particulière, mais non limitative pour la fabrication de clinker de ciment.

Dans les industries de traitement des matières minérales, telles que par exemple la production de clinker de ciment, les opérations de cuisson des matières, l'étape de calcination notamment, sont généralement suivies d'un refroidissement des matières destinées à rendre lesdites matières manipulables.

Généralement, ce refroidissement est mis en oeuvre au moins par soufflage d'air froid sur les matières chaudes.

Afin de diminuer la consommation énergétique de l'installation, on cherche à récupérer la chaleur contenue dans les matières chaudes. Aussi au cours du refroidissement de la matière, la chaleur contenue dans la matière est transmise à l'air soufflé. L'air chaud ainsi produit est le plus souvent utilisé comme air de combustion pour le combustible qui est employé dans l'installation de cuisson.

Cependant, les performances actuelles des refroidisseurs sont telles que le refroidissement complet des matières nécessite une quantité d'air qui excède généralement les besoins en air de combustion de l'installation de cuisson. Par exemple, dans le cas de la production de clinker de ciment, on a besoin de souffler environ de 1,8 à 2,2 Nm³ d'air par kg de matière produite, lorsque les besoins en air de combustion sont inférieurs à 1 Nm³ par kg de matière produite.

Ces excès d'air génèrent un flux d'exhaure, (ou flux excédentaire) qui nécessite une installation de filtration et qui consomme de l'énergie de ventilation. Le flux d'exhaure emporte avec lui une partie de l'énergie que l'on peut difficilement valoriser en raison de la température faible dudit flux. On connaît toutefois de l'état de la technique des installations permettant de récupérer une partie de l'énergie contenue dans ce flux d'exhaure : le document FR-08/03.050 en est un exemple.

Parmi les techniques couramment utilisées pour le refroidissement, on trouve les refroidisseurs tubulaires, cylindriques, tournants dans lesquels la matière circule généralement à contre-courant d'un flux d'air, et les refroidisseurs à grille, sur lesquels un lit épais de matière se déplace latéralement en étant traversé par de l'air soufflé sous la grille.

Le refroidissement peut être parfois, quoique peu fréquemment, réalisé par l'association des deux technologies utilisées en série. On connaît ainsi de l'état de la technique un procédé illustré dans la présente demande et qui sera plus amplement développé, permettant de refroidir les matières par l'association en série d'un refroidisseur tubulaire et d'un refroidisseur à grille.

Les matières sont tout d'abord refroidies dans le refroidisseur tubulaire puis, ensuite dans le refroidisseur à grille. Afin d'augmenter l'intensité du refroidissement au niveau du refroidisseur tubulaire, on injecte de l'eau sur les matières chaudes produisant ainsi de la vapeur d'eau. Cette eau évaporée n'est pas utilisée comme gaz de combustion et est conduite séparément jusqu'à un dispositif de filtration, la chaleur contenue dans cette vapeur étant perdue.

Dans une telle installation, une source d'air froid unique alimente le refroidisseur à grille, la quantité d'air froid soufflé étant surabondante par rapport aux besoins en air de combustion de l'installation. Une partie seulement de l'air réchauffé dans le refroidisseur à grille est utilisée comme air de combustion, l'autre partie constituant un flux d'exhaure nécessitant une filtration et des moyens de ventilation adaptés.

L'art antérieur connaît du document DE 10 2006 026 234, ou WO 2007 141 307, une installation de fabrication de clinker de ciment. Selon un mode de réalisation, illustré à la figure 2 du document DE 10 2006 026 234, les matières granuleuses en sortie du four rotatif sont refroidies dans une première section, puis une deuxième section d'un refroidisseur à lit traversé par un gaz de refroidissement.

La première section peut être refroidie par un média non oxydant. La deuxième section est refroidie par de l'air. Afin de réaliser des économies d'énergie, cette installation présente un circuit de recyclage du média non oxydant, réchauffé par les matières granuleuses, vers la première section du refroidisseur. A cet effet, le média non oxydant réchauffé est refroidi par un échangeur thermique, filtré afin de séparer les poussières, puis acheminé au moins partiellement jusqu'à la première section du refroidisseur pour servir à nouveau de média réfrigérant non oxydant. Une conduite d'exhaure sur le circuit de recyclage permet de rejeter l'autre partie du média, après filtration, dans l'environnement.

L'air réchauffé en sortie de la deuxième section du refroidisseur est également filtré (par un cyclone) afin de séparer les poussières, puis réchauffé par ledit échangeur et est acheminé afin de servir de gaz de combustion pour l'installation.

Si cette installation permet de réaliser des économies d'énergie, elle présente l'inconvénient, tout comme l'état de la technique précédemment cité, de nécessiter des dispositifs de filtration tels que des cyclones afin de dépoussiérer les gaz média réchauffés, engendrés par ledit refroidisseur.

Le but de la présente invention est de pallier les inconvénients précités en proposant un procédé de refroidissement des matières solides granuleuses, issues d'une installation de cuisson continue, dont la consommation énergétique est optimisée, tout en diminuant le nombre des équipements nécessaires à l'installation, et ainsi, son coût.

Plus particulièrement, le but de la présente invention est de proposer un tel procédé, dont l'installation ne présente pas de flux d'exhaure et ne nécessite pas la filtration d'une partie de l'air réchauffé dans les refroidisseurs de l'installation.

Un autre but de l'invention est de proposer une telle installation en tant que telle.

D'autres buts et avantages de la présente invention apparaîtront au cours de la description qui va suivre, qui n'est donnée qu'à titre indicatif, et qui n'a pas pour but de la limiter.

L'invention concerne un procédé de refroidissement de matières solides granuleuses issues d'une installation de cuisson continue, présentant au moins une zone de combustion d'un combustible pour la cuisson des matières granuleuses, dans lequel on réalise la cuisson des matières granuleuses dans ladite installation puis le refroidissement desdites matières granuleuses cuites en deux étapes successives, une première étape de refroidissement mise en oeuvre dans un premier refroidisseur de l'installation et une deuxième étape de refroidissement mise en oeuvre dans un second refroidisseur de l'installation, procédé dans lequel :
- on prévoit une source d'air froid pour le refroidissement des matières granuleuses, ladite source d'air froid alimentant directement ledit second refroidisseur par soufflage,
- on utilise l'air réchauffé par les matières granuleuses cuites, lors du refroidissement, comme gaz de combustion pour ladite au moins une zone de combustion de l'installation.

Selon le procédé conforme à l'invention :
- on achemine la totalité des gaz engendrés par ledit premier refroidisseur et ledit second refroidisseur vers la au moins une zone de combustion de ladite installation de cuisson pour être utilisée comme gaz de combustion, sans filtration desdits gaz,
- on ajuste la quantité d'air froid soufflé audit second refroidisseur de telle façon à couvrir sans excès les besoins en air de combustion de l'installation.

Le fait d'acheminer la totalité des gaz engendrés par le premier refroidisseur et le second refroidisseur et le fait d'ajuster la quantité d'air froid soufflé au second refroidisseur de telle façon à couvrir sans excès les besoins en air de combustion de l'installation permettent ainsi d'optimiser la récupération d'énergie contenue dans la matière chaude. De plus, ces dispositions permettent d'éviter la présence d'un flux d'exhaure et ainsi des moyens de ventilation et des dispositifs de filtration associés à ce flux d'exhaure.

Selon un mode de réalisation avantageux, on contrôle la température des matières granuleuses en sortie du second refroidisseur par l'intermédiaire d'un puits de chaleur.

Eventuellement, le puits de chaleur permet le contrôle de la température des matières en sortie du premier refroidisseur.

Eventuellement, on abaisse la température de l'air sortant du second refroidisseur au moyen d'un échangeur constituant au moins en partie ledit puits de chaleur, avant d'introduire l'air refroidi par ledit échangeur dans ledit premier refroidisseur, comme air de refroidissement. L'air sortant du second refroidisseur peut être utilisé en totalité comme air de refroidissement au premier refroidisseur.

Eventuellement, ledit puits de chaleur peut consister en ledit échangeur et on détermine la température des matières granuleuses en sortie dudit premier refroidisseur par réglage du débit du fluide de refroidissement dudit échangeur.

Selon un mode de réalisation, le puits de chaleur peut être réalisé au moins en partie par l'évaporation d'eau injectée dans ledit premier refroidisseur.

Eventuellement, le puits de chaleur peut consister en ladite évaporation d'eau injectée dans ledit premier échangeur et on détermine la température des matières granuleuses en sortie dudit premier refroidisseur par le réglage du débit d'eau injectée.

Eventuellement, outre l'eau injectée, le fluide de refroidissement au premier refroidisseur est constitué par une partie de l'air sortant dudit second refroidisseur.

Selon un mode de réalisation, l'eau injectée peut constituer l'unique fluide de refroidissement utilisé dans ladite première étape de refroidissement audit premier refroidisseur. Dans ce cas, on mélange l'eau évaporée dudit premier refroidisseur avec une partie au moins de l'air réchauffé sortant dudit second refroidisseur avant d'utiliser le mélange air humide comme air de combustion dans ladite installation.

Ledit premier refroidisseur peut être éventuellement un refroidisseur tubulaire comprenant un cylindre tournant dans lequel la matière circule et le second refroidisseur un refroidisseur à grilles dans lequel un lit épais de matières se déplace latéralement sur la grille en étant traversé par de l'air soufflé sous la grille.

L'invention concerne également une installation de cuisson continue présentant au moins une zone de combustion d'un combustible pour la cuisson des matières solides granuleuses dans laquelle les matières granuleuses sont refroidies en deux étapes successives, une première étape de refroidissement étant mise en oeuvre dans un premier refroidisseur de l'installation, et une deuxième étape de refroidissement étant mise en oeuvre dans un second refroidisseur de l'installation. Ladite installation présente une source d'air froid pour le refroidissement des matières alimentant directement ledit second refroidisseur.

Selon l'invention, ladite installation présente :
- des conduites de gaz permettant d'acheminer la totalité des gaz chauds engendrés par ledit premier refroidisseur et ledit second refroidisseur vers ladite au moins une zone de combustion de ladite installation, sans filtration desdits gaz,
- des moyens pour ajuster la quantité d'air froid soufflé audit premier refroidisseur de telle façon à couvrir sans excès les besoins en air de combustion de ladite installation.

Selon un mode de réalisation, l'installation présente un puits de chaleur apte à permettre le contrôle, voire le réglage de la température des matières granuleuses en sortie dudit premier refroidisseur.

Le puits de chaleur peut comprendre un échangeur permettant de refroidir les gaz sortant du second refroidisseur avant d'utiliser des gaz refroidis par l'échangeur audit premier refroidisseur comme air de refroidissement.

Le puits de chaleur peut comprendre des moyens pour injecter de l'eau dans ledit premier refroidisseur.

L'invention sera mieux comprise à la lecture de la description suivante accompagnée des dessins en annexe parmi lesquels:
- la figure 1 illustre un premier mode de réalisation du procédé conforme à l'invention mis en avant dans une installation conforme à l'invention selon un premier mode de réalisation,
- la figure 2 illustre un second mode de réalisation du procédé conforme à l'invention mis en oeuvre dans une installation conforme à l'invention selon un second mode de réalisation,
- la figure 3 illustre un procédé conforme à l'invention selon un troisième mode de réalisation mis en oeuvre dans une installation conforme à l'invention selon un troisième mode de réalisation,
- la figure 4 illustre une installation conforme à l'état de la technique dont le refroidissement met en oeuvre en série un premier refroidisseur tubulaire et un second refroidisseur à grille.

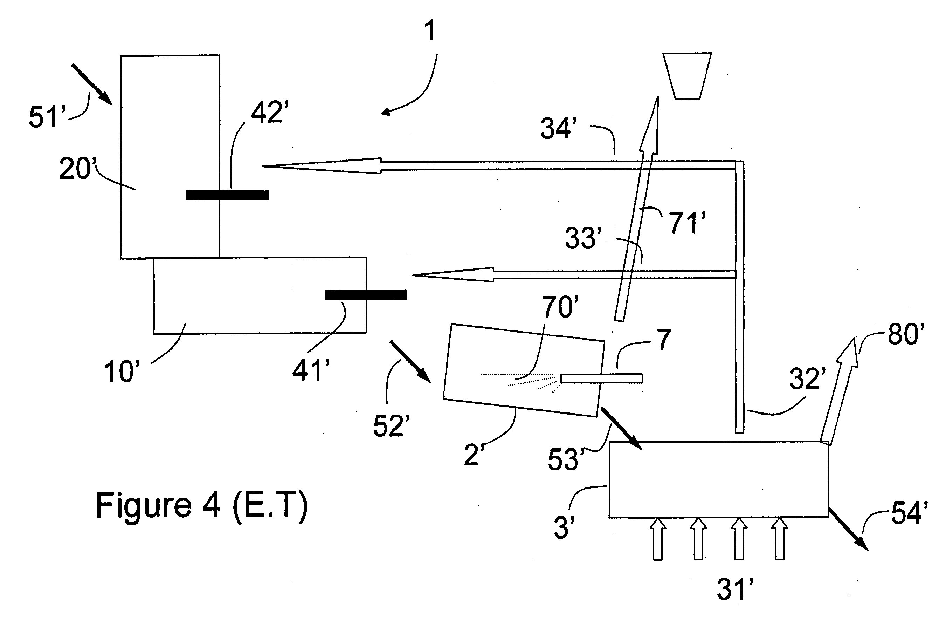

Nous décrivons tout d'abord l'exemple de la figure 4 qui décrit une installation de l'état de l'art.

Cette installation comprend un préchauffeur à cyclones 20', muni d'un brûleur 42', suivi d'un four rotatif 10' muni d'un brûleur 41' destinés pour la fabrication de clinker de ciment. Les matières granuleuses 51' sont alimentées au préchauffeur 20'. Dans le préchauffeur 20', les matières réalisent une part de la décarbonatation. La décarbonatation des matières se poursuit dans le four rotatif 10'. Les matières chaudes 52' sont évacuées du four et refroidies dans un premier refroidisseur 2', tubulaire. Les matières chaudes 53' sortant du premier refroidisseur 2' sont refroidies dans un second refroidisseur 3'.

Dans le premier refroidisseur 2', les matières sont refroidies par injection d'eau 70 par l'intermédiaire de moyens repérés 7. L'eau évaporée s'évacue du premier refroidisseur par un flux 71' dirigé vers une unité de filtration 81'. Cette vapeur n'est pas réintroduite vers les zones de combustion de l'installation.

Le second refroidisseur 3' est alimenté par une source d'air froid 31' en quantité surabondante par rapport aux besoins en air de combustion des brûleurs 42' et 41' de l'installation. Une partie 32', seulement, de l'air réchauffé par les matières granuleuses est dirigée vers les zones de combustion de l'installation. Une première partie 33' est dirigée vers le four rotatif 10', une deuxième partie 34' des gaz étant dirigée vers le préchauffeur 20'. L'air en excès s'évacue par un flux d'exhaure 80' du second refroidisseur 3' qui nécessite la mise en oeuvre de moyens de ventilation et d'un dispositif de filtration (non illustrés).

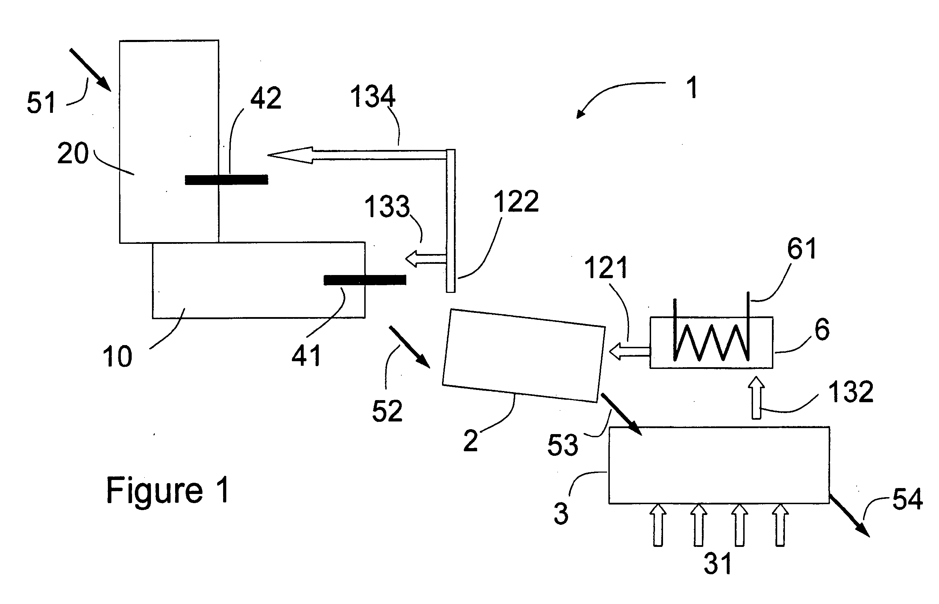

L'invention concerne un procédé de refroidissement de matières solides, granuleuses, issues d'une installation de cuisson continue. Cette installation présente au moins une zone de combustion 41, 42 d'un combustible pour la cuisson des matières granuleuses, telle qu'illustrée aux figures 1 à 3.

Selon le procédé, on réalise la cuisson des matières granuleuses dans ladite installation puis ledit refroidissement desdites matières granuleuses cuites en deux étapes successives. Une première étape de refroidissement est mise en oeuvre dans un premier refroidisseur 2 notamment du type tubulaire, de l'installation, et une deuxième étape de refroidissement est mise en oeuvre dans un second refroidisseur 3 de l'installation, notamment du type à grille.

Selon le procédé :
- on prévoit une source d'air froid 31 pour le refroidissement des matières granuleuses, ladite source d'air froid 31 alimentant directement le second refroidisseur 3 par soufflage,
- on utilise l'air réchauffé par les matières granuleuses cuites lors du refroidissement comme gaz de combustion pour ladite au moins une zone de combustion 41, 42 de l'installation 1.

Selon l'invention :
- on achemine la totalité des gaz 133, 134 ; 222, 234 ; 334, 335 engendrés par ledit premier refroidisseur 2 et ledit second refroidisseur 3 vers ladite au moins une zone de combustion 41, 42 de ladite installation de cuisson pour être utilisé comme gaz de combustion,
- on ajuste la quantité d'air froid soufflé audit second refroidisseur de telle façon à couvrir sans excès les besoins en air de combustion de ladite installation.

Avantageusement, le procédé pourra prévoir également de contrôler la température des matières granuleuses en sortie dudit second refroidisseur 3 par l'intermédiaire d'un puits de chaleur 6 ; 70. Eventuellement, et tel qu'illustré selon les exemples des figures notamment, le puits de chaleur 6 ; 70 peut être agencé de telle façon à permettre également le contrôle de la température des matières granuleuses en sortie du premier échangeur 2.

Nous décrivons maintenant les trois exemples des figures 1, 2 et 3.
La figure 1 décrit un mode de réalisation dans lequel le puits de chaleur est constitué par un échangeur 6 qui refroidit l'air 132 sortant du second refroidisseur 3 du type à grille, avant d'introduire l'air refroidi 121 par ledit échangeur 6 dans ledit premier refroidisseur 2, du type refroidisseur tubulaire.

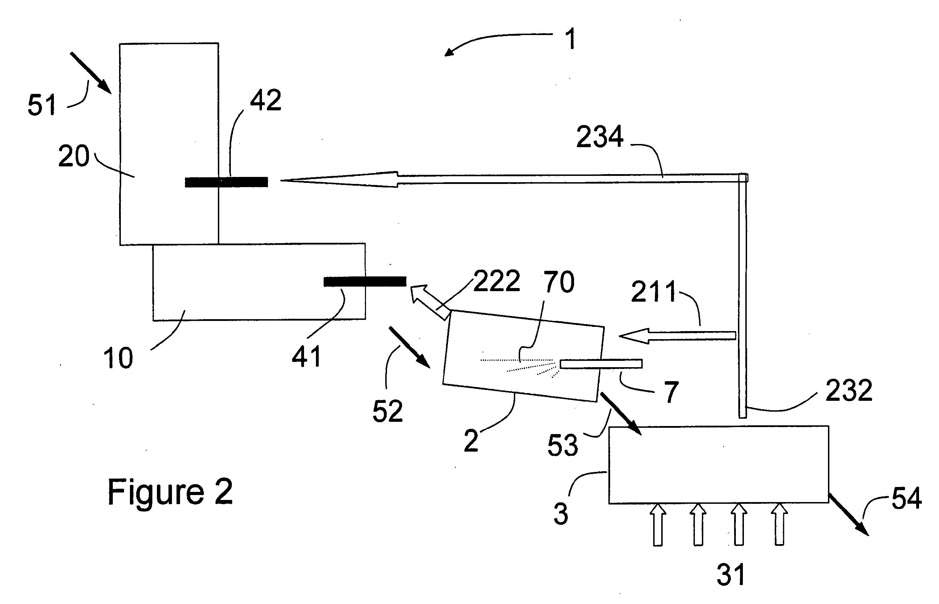

La figure 2 décrit un mode de réalisation dans lequel le puits de chaleur est constitué par l'évaporation d'eau injectée 70 dans le premier refroidisseur 2, l'air chaud produit par le second refroidisseur étant utilisé comme fluide de refroidissement dans le premier refroidisseur, en combinaison avec l'eau injectée.

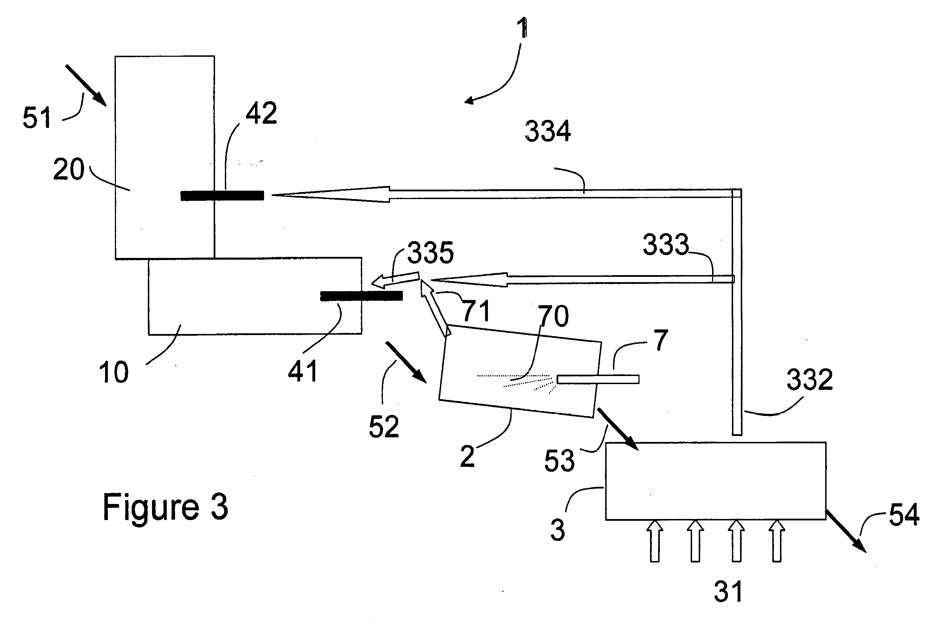

La figure 3 décrit un mode de réalisation dans lequel le puits de chaleur est constitué par l'évaporation d'eau injectée dans le premier refroidisseur, l'air chaud produit par le second refroidisseur 3 ne passant pas au travers du premier refroidisseur 2.

Dans les trois cas, la totalité des flux gazeux sortant des refroidisseurs, premier refroidisseur et second refroidisseur, est utilisée dans l'installation comme gaz de combustion pour la cuisson, voire la calcination des matières granuleuses.

Aussi, la figure 1 représente une installation 1 de cuisson qui traite une matière 51 et produit une matière granuleuse chaude 52. Il s'agit notamment d'une installation pour la fabrication de clinker de ciment comprenant un préchauffeur à cyclones 20 et un four rotatif 10.

La matière granuleuse chaude est refroidie en deux étapes, d'abord dans le premier refroidisseur 2 qui est un refroidisseur tubulaire, la matière 53 sortant du premier refroidisseur 2 à une température intermédiaire pour alimenter un second refroidisseur 3 à grille, la matière 54 sortant du second refroidisseur 3 à une température finale compatible à sa manipulation.

L'installation peut comporter plusieurs zones de combustion telles que par exemple brûleur 41 au niveau du four rotatif 10 et brûleur 42 au niveau du précalcinateur (non illustré) du préchauffeur à cyclones 20.

Le second refroidisseur 3 reçoit de l'air froid 31 et produit de l'air chaud 132, lequel est soumis à un échangeur 6 dans lequel il transfère une partie de sa chaleur à un circuit de fluide 61. Eventuellement, cet échangeur 6 peut faire partie d'un dispositif générateur de vapeur, associé à une turbine pour la récupération d'énergie. La température du flux d'air chaud 132 peut être assez élevée et notamment supérieure à 500 °C. L'utilisation de l'énergie transmise au circuit de fluide 61 peut atteindre un rendement élevé.

L'air chaud refroidi 121 (par l'échangeur 6) est utilisé pour refroidir le clinker dans le premier refroidisseur 2 qui produit de l'air chaud 122. L'abaissement de la température de l'air 132 réalisé par l'échangeur 6 permet d'améliorer l'efficacité du refroidissement des matières dans le premier refroidisseur 2.

Il est ainsi permis d'atteindre le refroidissement complet de la matière sans augmenter la quantité d'air soufflé 31 qui est ajustée de telle façon à couvrir sans excès les besoins en air de combustion de l'installation, et plus particulièrement les besoins en air de combustion des zones de combustion 41, 42. L'air chaud 122 est divisé en deux flux 133, 134, l'un 133 des flux alimentant la zone de combustion 41 en air de combustion, l'autre flux 134 alimentant la zone de combustion 42 en air de combustion.

La figure 2 représente une installation 1 de cuisson qui traite une matière 51 et produit une matière granuleuse chaude 52. Il peut notamment s'agir d'une installation comprenant un préchauffeur à cyclones 20 et un four rotatif 10, tel que rencontré dans les installations de fabrication de clinker de ciment.

La matière chaude 52 est refroidie en deux étapes, d'abord dans un premier refroidisseur 2, la matière 53 sortant du premier refroidisseur 2 alimentant un second refroidisseur 3. Le premier refroidisseur 2 peut être du type tubulaire, le second refroidisseur 3 du type à grille.

L'installation 1 de cuisson peut comporter plusieurs zones de combustion 41, 42 du combustible, notamment une zone de combustion 41 au niveau du four rotatif 10, et une zone de combustion 42 au niveau du précalcinateur (non illustré) du préchauffeur 20. Le second refroidisseur 3 reçoit de l'air froid 31 et produit de l'air chaud 232, lequel est divisé en deux flux, l'un 234 allant directement alimenter en air de combustion la zone de combustion 42 de l'installation au niveau du préchauffeur 20, tandis que l'autre 211 est conduit à travers le premier refroidisseur 2.

Selon cet exemple, de l'eau 70 est injectée dans le premier refroidisseur 2, la chaleur consommée par l'évaporation de l'eau permettant d'augmenter l'efficacité du premier refroidisseur 2. Il est permis ainsi d'atteindre le refroidissement complet de la matière sans augmenter la quantité d'air 31 soufflé au second refroidisseur 3 qui est ajustée pour couvrir sans excès les besoins en air de combustion de l'installation. L'air humide chaud 222 mélange du flux 211 et de la vapeur d'eau est utilisé comme air de combustion notamment au niveau de la zone de combustion 41 de l'installation au niveau du four rotatif 10.

Il est à noter que cet exemple de la figure 2 peut être modifié en dirigeant le flux 234 vers la zone de combustion 41 du four et le flux 222 vers la zone de combustion 42 du préchauffeur à cyclones 20.

La figure 3 représente une installation 1 de cuisson qui traite une matière 51 et produit une matière granuleuse chaude 52. Il peut notamment s'agir d'une installation comprenant un préchauffeur à cyclones 20 et un four rotatif 10.

La matière granuleuse chaude 52 est refroidie en deux étapes d'abord dans un premier refroidisseur 2, tubulaire, la matière 53 sortant à une température intermédiaire pour alimenter un second refroidisseur 3, à grille, la matière 54 sortant du second refroidisseur 3 étant à une température permettant sa manipulation.

L'installation comporte plusieurs zones de combustion 41, 42 de combustible, et notamment l'une 42 au niveau du précalcinateur (non illustré) du préchauffeur à cyclones 20 et l'autre 41 au niveau du four rotatif 10. Le second refroidisseur 3, à grille, reçoit de l'air froid 31 et produit de l'air chaud 332, lequel est divisé en plusieurs flux 333, 334.

L'un des flux 334 alimente directement en air de combustion la zone de combustion 42 de l'installation au niveau du préchauffeur 20 tandis que l'autre 333 est conduit séparément.

Selon cet exemple, de l'eau 70 est injectée par des moyens 7 dans le premier refroidisseur 2 et la chaleur consommée par l'évaporation de l'eau permet de réaliser le refroidissement de la matière dans ledit premier refroidisseur 2. Dans le premier refroidisseur 2, cette eau injectée 70 constitue le seul fluide de refroidissement et génère de la vapeur d'eau. La vapeur d'eau à haute température 71 issue du premier refroidisseur 2 est mélangée au flux d'air 333, le mélange air humide 335 étant utilisé comme gaz de combustion notamment au niveau de la zone de combustion 41.

Il est à noter que cet exemple de la figure 3 peut être modifié en dirigeant le flux 334 vers la zone de combustion 41 du four rotatif 10 et le flux air humide 335 vers la zone de combustion 42 du préchauffeur.

Il est à noter que le mode de réalisation de la figure 2 peut être modifié en prévoyant un échangeur 6 selon le mode de réalisation de la figure 1 afin de refroidir le flux d'air 211 de l'exemple de la figure 2, avant son introduction dans le premier refroidisseur 2.

Naturellement, d'autres modes de réalisation auraient pu être envisagés sans pour autant sortir du cadre de l'invention définie par les revendications ci-après.

## Revendications

1. Procédé de refroidissement de matières granuleuses issues d'une installation (1) de cuisson continue, présentant au moins une zone de combustion (41, 42) d'un combustible pour la cuisson des matières granuleuses, dans lequel on réalise la cuisson des matières granuleuses dans ladite installation puis le refroidissement desdites matières granuleuses cuites en deux étapes successives, une première étape de refroidissement mise en oeuvre dans un premier refroidisseur (2) de l'installation et une deuxième étape de refroidissement mise en oeuvre dans un second refroidisseur (3) de l'installation, procédé dans lequel :
- on prévoit une source d'air froid (31) pour le refroidissement des matières granuleuses, ladite source d'air froid (31) alimentant directement ledit second refroidisseur (3) par soufflage,
- on utilise l'air réchauffé par les matières granuleuses cuites, lors du refroidissement, comme gaz de combustion pour ladite au moins une zone de combustion (41, 42) de l'installation (1),
**caractérisé en ce que** :
- on achemine la totalité des gaz (133, 134 ; 222, 234; 334, 335) engendrés par ledit premier refroidisseur (2) et ledit second refroidisseur (3) vers ladite au moins une zone de combustion (41, 42) de ladite installation de cuisson pour être utilisés comme gaz de combustion, sans filtration desdits gaz,
- on ajuste la quantité d'air froid (31) soufflé audit second refroidisseur (3) de telle façon à couvrir sans excès les besoins en air de combustion de ladite installation (1).

2. Procédé selon la revendication 1, dans lequel le premier refroidisseur est un refroidisseur tubulaire, ledit second refroidisseur un refroidisseur à grille.

3. Procédé selon la revendication 1 ou 2, dans lequel on contrôle la température des matières granuleuses (54) en sortie dudit second refroidisseur (3) et on contrôle la température des matières (53) en sortie du premier refroidisseur (2), par l'intermédiaire d'un échangeur (6), et on abaisse la température de l'air sortant (132) du second refroidisseur (3) au moyen dudit échangeur (6) avant d'introduire l'air refroidi (121) par ledit échangeur (6) dans ledit premier refroidisseur (2), comme air de refroidissement.

4. Procédé selon la revendication 3 dans lequel l'air sortant (132) du second refroidisseur (3) est utilisé en totalité comme air de refroidissement du premier refroidisseur (2).

5. Procédé selon la revendication 1 ou 2, dans lequel on contrôle la température des matières granuleuses (54) en sortie du second refroidisseur (3) par injection d'eau dans le premier refroidisseur (2) et l'évaporation de l'eau injectée (70) dans ledit premier refroidisseur (2).

6. Procédé selon la revendication 5, dans lequel on détermine la température des matières granuleuses en sortie dudit premier refroidisseur (2) par le réglage du débit d'eau injectée (70).

7. Procédé selon la revendication 5 ou 6, dans lequel, outre l'eau injectée (70), le fluide de refroidissement au premier refroidisseur (2) est constitué par une partie (211) de l'air sortant dudit second refroidisseur (3).

8. Procédé selon la revendication 5 ou 6, dans lequel l'eau injectée (70) constitue l'unique fluide de refroidissement utilisé dans la première étape de refroidissement audit premier refroidisseur (2).

9. Procédé selon la revendication 8, dans lequel on mélange l'eau évaporée (71) dudit premier refroidisseur (2) avec une partie (333) au moins de l'air réchauffé sortant dudit second refroidisseur (3) avant d'utiliser le mélange air humide (335) comme air de combustion dans ladite installation (1).

10. Installation (1) de cuisson ou de calcination continue présentant au moins une zone de combustion (41, 42) d'un combustible pour la cuisson des matières granuleuses dans lequel les matières granuleuses sont refroidies en deux étapes successives, une première étape de refroidissement mise en oeuvre dans un premier refroidisseur (2) de l'installation et une deuxième étape de refroidissement mise en oeuvre dans un second refroidisseur (3) de l'installation, ladite installation (1) présentant une source d'air froid (31) pour le refroidissement des matières alimentant directement ledit second refroidisseur (3) **caractérisée en ce qu'**elle présente :
- des conduites de gaz permettant d'acheminer la totalité des gaz chauds engendrés (133, 134 ; 222, 234 ; 334, 335) par ledit premier refroidisseur (2) et ledit second refroidisseur (3) vers ladite au moins une zone de combustion (41, 42) de ladite installation (1), sans filtration desdits gaz,
- des moyens pour ajuster la quantité d'air froid soufflé audit second refroidisseur (3) de telle façon à couvrir sans excès les besoins en air de combustion de ladite installation.

11. Installation selon la revendication 10, dans lequel le premier refroidisseur est un refroidisseur tubulaire, ledit deuxième refroidisseur un refroidisseur à grille, alimenté par la source d'air froid (31).

12. Installation selon la revendication 10 ou 11, présentant un échangeur (6) apte à permettre le contrôle, voire réglage de la température des matières granuleuses en sortie dudit second refroidisseur (3), ledit échangeur (6) permettant de refroidir les gaz (132) sortant dudit second refroidisseur (3) avant d'utiliser les gaz (121) refroidis par l'échangeur (6) audit premier refroidisseur (2) comme air de refroidissement.

13. Installation selon l'une des revendications 10 à 12 présentant des moyens (7) pour injecter de l'eau dans ledit premier refroidisseur (2) aptes à permettre le contrôle, voire le réglage de la température des matières granuleuses en sortie dudit second refroidisseur (3).

## Patentansprüche

1. Verfahren zum Kühlen von körnigen Materialien, die von einer kontinuierlichen Brennanlage (1) kommen, die mindestens eine Verbrennungszone (41, 42) eines Brennstoffes zum Brennen der körnigen Materialien aufweist, bei dem das Brennen der körnigen Materialien in der Anlage und dann das Kühlen der gebrannten körnigen Materialien in zwei aufeinanderfolgenden Schritten durchgeführt werden, einem ersten Kühlschritt, der in einem ersten Kühler (2) der Anlage ausgefürhrt wird, und einem zweiten Kühlschritt, der in einem zweiten Kühler (3) der Anlage ausgefürhrt wird, wobei bei dem Verfahren:
- eine Kaltluftquelle (31) zum Kühlen der körnigen Materialien vorgesehen ist, wobei die Kaltluftquelle (31) den zweiten Kühler (3) durch Blasen direkt versorgt,
- die von den gebrannten körnigen Materialien beim Kühlen wiedererhitzte Luft als Verbrennungsgas für die mindestens eine Verbrennungszone (41, 42) der Anlage (1) verwendet wird,
**dadurch gekennzeichnet, dass**:
- die Gesamtheit der Gase (133, 134; 222, 234; 334, 335), die von dem ersten Kühler (2) und dem zweiten Kühler (3) erzeugt werden, zu der mindestens einen Verbrennungszone (41, 42) der Brennanlage befördert werden, um als Verbrennungsgase ohne Filterung der Gase verwendet zu werden,
- die Kaltluftmenge (31), die in den zweiten Kühler (3) eingeblasen wird, derart angepasst wird, dass sie ohne Überschuss den Bedarf der Anlage (1) an Verbrennungsluft abdeckt.

2. Verfahren nach Anspruch 1, bei dem der erste Kühler ein Röhrenkühler und der zweite Kühler ein Gitterkühler ist.

3. Verfahren nach Anspruch 1 oder 2, bei dem die Temperatur der körnigen Materialien (54) am Ausgang aus dem zweiten Kühler (3) und die Temperatur der Materialien (53) am Ausgang aus dem ersten Kühler (2) mit Hilfe eines Wärmetauschers (6) kontrolliert wird, und die Temperatur der aus dem zweiten Kühler (3) austretenden Luft (132) mit Hilfe des Wärmetauschers (6) gesenkt wird, bevor die gekühlte Luft (121) vom Wärmetauscher (6) in den ersten Kühler (2) als Kühlluft eingeleitet wird.

4. Verfahren nach Anspruch 3, bei dem die aus dem zweiten Kühler (3) austretende Luft (132) zur Gänze als Kühlluft des ersten Kühlers (2) verwendet wird.

5. Verfahren nach Anspruch 1 oder 2, bei dem die Temperatur der körnigen Materialien (54) am Ausgang aus dem zweiten Kühler (3) durch Einspritzen von Wasser in den ersten Kühler (2) und Verdampfen des eingespritzten Wassers (70) in dem zweiten Kühler (2) kontrolliert wird.

6. Verfahren nach Anspruch 5, bei dem die Temperatur der körnigen Materialien am Ausgang aus dem ersten Kühler (2) durch die Regelung der Menge an eingespritztem Wasser (70) bestimmt wird.

7. Verfahren nach Anspruch 5 oder 6, bei dem außer dem eingespritzten Wasser (70) das Kühlfluid im ersten Kühler (2) von einem Teil (211) der aus dem zweiten Kühler (3) austretenden Luft gebildet ist.

8. Verfahren nach Anspruch 5 oder 6, bei dem das eingespritzte Wasser (70) das einzige Kühlfluid darstellt, das in dem ersten Kühlschritt im ersten Kühler (2) verwendet wird.

9. Verfahren nach Anspruch 8, bei dem das verdampfte Wasser (71) des ersten Kühlers (2) mit mindestens einem Teil (333) der wiedererhitzten Luft, die aus dem zweiten Kühler (3) austritt gemischt wird, bevor das feuchte Luftgemisch (335) als Verbrennungsluft in der Anlage (1) verwendet wird.

10. Kontinuierliche Brenn- oder Kalzinierungsanlage (1), die mindestens eine Verbrennungszone (41, 42) eines Brennstoffes zum Brennen der körnigen Materialien aufweist, bei dem das Kühlen der körnigen Materialien in zwei aufeinanderfolgenden Schritten durchgeführt wird, einem ersten Kühlschritt, der in einem ersten Kühler (2) der Anlage eingesetzt wird, und einem zweiten Kühlschritt, der in einem zweiten Kühler (3) der Anlage eingesetzt wird, wobei die Anlage (1) eine Kaltluftquelle (31) zum Kühlen der Materialien umfasst, die den zweiten Kühler (3) direkt speist, **dadurch gekennzeichnet, dass** sie umfasst
- Gasleitungen, die es ermöglichen, die Gesamtheit der von dem ersten Kühler (2) und dem zweiten Kühler (3) erzeugten heißen Gase (133, 134; 222, 234; 334, 335) zu der mindestens einen Verbrennungszone (41, 42) der Anlage (1) ohne Filterung der Gase zu befördern,
- Mittel, um die in den zweiten Kühler (3) eingeblasene Kaltluftmenge derart anzupassen, dass ohne Überschuss der Bedarf an Verbrennungsluft der Anlage abgedeckt wird.

11. Anlage nach Anspruch 10, bei der der erste Kühler ein Rohrkühler und der zweite Kühler ein Kühler mit Gitter ist, der von der Kaltluftquelle (31) gespeist wird.

12. Anlage nach Anspruch 10 oder 11, umfassend einen Wärmetauscher (6), der geeignet ist, die Kontrolle bzw. Einstellung der Temperatur der körnigen Materialien am Ausgang des zweiten Kühlers (3) zu ermöglichen, wobei es der Wärmetauscher (6) ermöglicht, die Gase (132), die aus dem zweiten Kühler (3) austreten, zu kühlen, bevor die durch den Wärmetauscher (6) gekühlten Gase (121) im ersten Kühler (2) als Kühlluft verwendet werden.

13. Anlage nach einem der Ansprüche 10 bis 12, umfassend Mittel (7), um Wasser in den ersten Kühler (2) einzuspritzen, die geeignet sind, die Kontrolle bzw. Einstellung der Temperatur der körnigen Materialien am Ausgang des zweiten Kühlers (3) zu ermöglichen.

## Claims

1. Method of cooling granular materials coming from a continuous curing facility (1), having at least one area for burning (41, 42) a fuel for the curing of the granular materials, wherein is carried out the curing of the granular materials in said facility then the cooling of said cured granular materials in two consecutive steps, a first cooling step implemented in a first cooler (2) of the facility and a second cooling step implemented in a second cooler (3) of the facility, method wherein:
- a cold air source (31) is provided for the cooling of the granular materials, said cold air source (31) supplying directly said second cooler (3) by air blowing,
- the air heated by the cured granular materials, during the cooling, is used as combustion gas for said at least one area for burning (41, 42) of the facility (1),
**characterised in that**:
- the totality of the gases (133, 134; 222, 234; 334, 335) generated by said first cooler (2) and said second cooler (3) are routed towards said at least one area for burning (41, 42) of said curing facility in order to be used as combustion gas, without filtration of said gases,
- the quantity of cold air (31) blown to said second cooler (3) is adjusted in such a way as to cover but not excessively the air combustion needs of said facility (1).

2. Method according to claim 1, wherein the first cooler is a tubular cooler, said second cooler a grate cooler.

3. Method according to claim 1 or 2, wherein the temperature of the granular materials (54) at the output of said second cooler (3) is controlled and the temperature of the materials (53) at the output of the first cooler (2) is controlled, by the intermediary of an exchanger (6), and the temperature of the air exiting (132) from the second cooler (3) is lowered by means of said exchanger (6) before introducing the air cooled (121) by said exchanger (6) into said first cooler (2), as cooling air.

4. Method according to claim 3 wherein the air exiting (132) from the second cooler (3) is used in totality as cooling air of the first cooler (2).

5. Method according to claim 1 or 2, wherein the temperature of the granular materials (54) at the output of the second cooler (3) is controlled by injection of water in the first cooler (2) and the evaporation water injected (70) into said first cooler (2).

6. Method according to claim 5, wherein the temperature of the granular materials at the output of said first cooler (2) is determined by the adjusting of the flow of injected water (70).

7. Method according to claim 5 or 6, wherein, in addition to the injected water (70), the cooling fluid to the first cooler (2) is constituted by a portion (211) of the air exiting from said second cooler (3).

8. Method according to claim 5 or 6, wherein the injected water (70) constitutes the only cooling fluid used in the first cooling step to said first cooler (2).

9. Method according to claim 8, wherein the evaporated water (71) of said first cooler (2) is mixed with a portion (333) at least of the heated air exiting from said second cooler (3) before using the wet air mixture (335) as combustion air in said facility (1).

10. Continuous curing or calcination facility (1) having least one area for burning (41, 42) a fuel for the curing of the granular materials wherein the granular materials are cooled in two consecutive steps, a first cooling step implemented in a first cooler (2) of the facility and a second cooling step implemented in a second cooler (3) of the facility, said installation (1) having a cold air source (31) for the cooling of the materials supplying directly said second cooler (3) **characterised in that** it has:
- gas ducts making it possible to route the totality of the hot gases generated (133, 134; 222, 234; 334, 335) by said first cooler (2) and said second cooler (3) towards said at least one area for burning (41, 42) of said facility (1), without filtration of said gases,
- means for adjusting the quantity of cold air blown to said second cooler (3) in such a way as to cover but not excessively the air combustion needs of said facility.

11. Installation according to claim 10, wherein the first cooler is a tubular cooler, said second cooler a grate cooler, supplied by the cold air source (31).

12. Installation according to claim 10 or 11, having an exchanger (6) able to allow for the control, and even the adjusting of the temperature of the granular materials at the output of said second cooler (3), said exchanger (6) making it possible to cool the gases (132) exiting from said second cooler (3) before using the gases (121) cooled by the exchanger (6) to said first cooler (2) as cooling air.

13. Installation according to one of claims 10 to 12 having means (7) for injecting water into said first cooler (2) able to allow for the control, and even the adjusting of the temperature of the granular materials at the output of said second cooler (3).
